# EUROPÄISCHE PATENTSCHRIFT

(11) **EP 2 517 298 B1**
(45) Veröffentlichungstag und Bekanntmachung des Hinweises auf die Patenterteilung: **05.04.2017**
(21) Anmeldenummer: 10800882.2
(22) Anmeldetag: 09.12.2010
(51) Int. Cl.: H01M 10/60

(54) **VERFAHREN ZUM TEMPERIEREN EINER STROMQUELLE EINES FAHRZEUGS**
METHOD FOR CONTROLLING THE TEMPERATURE OF AN ELECTRICAL POWER SOURCE OF A VEHICLE
PROCÉDÉ DESTINÉ À TEMPÉRER UNE SOURCE DE COURANT D'UN VÉHICULE

(30) Priorität: 22.12.2009 DE 102009059982
(43) Veröffentlichungstag der Anmeldung: 31.10.2012
(73) Patentinhaber: Volkswagen Aktiengesellschaft, 38436 Wolfsburg (DE)
(72) Erfinder: SCHMITT, Stefan, 38458 Velpke (DE); EHLERS, Carsten, 38100 Braunschweig (DE); SCHRÖTER, Horst, Achim, 38100 Braunschweig (DE); BRÜCK, Stefan, 38442 Wolfsburg (DE)
(86) Internationale Anmeldenummer: PCT/EP2010/007475
(87) Internationale Veröffentlichungsnummer: WO 2011/085760

(56) Entgegenhaltungen:
- EP-A2- 0 566 854
- DE-A1-102006 004 414
- DE-A1-102006 004 419
- DE-A1-102008 017 113
- US-A1- 2002 043 413

## Beschreibung

Die Erfindung betrifft ein Fahrzeug mit einer Vorrichtung zum Temperieren einer Stromquelle, insbesondere einer Batterie, eines Fahrzeugs, mit einem ersten Fluidpfad eines Klimageräts zum Temperieren und Führen von Luft, einem der Batterie thermisch zugeordneten oder zuordenbaren zweiten Fluidpfad zum Führen eines Kühlmediums eines Kühlers und des Klimageräts und einem dem Klimagerät zugeordneten oder zuordenbaren dritten Fluidpfad zum Führen eines Kühlmediums einer Kältemaschine zum Erzeugen von Kälte.

Vorrichtungen zum Temperieren einer Stromquelle sind bekannt. Bei der Stromquelle kann es sich um eine Batterie für ein Hybrid- und/oder Elektrofahrzeug handeln. Die Batterie kann während der Fahrt beziehungsweise bei einem Laden in einem Stand gekühlt werden. Die Kühlung kann mittels einer Innenraumluft des Fahrzeugs und mittels gekühlter Luft mittels eines der Batterie zugeordneten Verdampfers erfolgen. Die EP 1 637 709 A2 zeigt eine Anordnung von Komponenten zum Wärmetauschen von Wärme eines Kraftfahrzeugs mit mehrfachen Kühlkreisläufen mit zumindest einer Pumpe, zumindest einer Kontrollvorrichtung und zumindest einem Wärmetauscher. Die Vorrichtung weist zumindest einen ersten Kühlkreislauf auf, der wahlweise mit zumindest einem oder mehreren zusätzlichen Kühlkreisläufen zum Übertragen von Wärmeenergie verbindbar ist, und eine wahlweise fluidische Verbindung, die zwischen dem zusätzlichen Kühlkreislauf durch Mittel von zumindest einem Regelelement gebildet ist. Ferner ist ein PCT-Element vorgesehen, mittels dem ein die Batterie umgebendes Fluid erwärmbar ist. Die JP 2006 296 193 A betrifft eine Vorrichtung zum Halten einer Temperatur eines Elektrofahrzeuges auf einer Solltemperatur. Es ist ein zwischengeschalteter Wärmetauscher zwischen einem Klimaanlagenkreis, in dem ein Kältemittel zirkuliert und einem Kühlkreislauf, in dem ein Kühlmedium zirkuliert, angeordnet. Eine Temperatur einer Batterie ist durch Temperatureinstellmittel des Kältemittels eingestellt. Die Temperatureinstellmittel des Kältemittels werden gesteuert mittels einer Kontrollvorrichtung, die Temperatursensoren zugeordnet ist, insbesondere an einer Einlassseite und einer Auslassseite der Batterie. Die DE 10 2007 004 979 A1 offenbart eine Vorrichtung zur Kühlung beziehungsweise Temperierung einer Batterie in einem Kraftfahrzeug, insbesondere der Traktionsbatterie eines Hybridfahrzeugs (HV-Fahrzeug) mit Verbrennungsmotor und integriertem Elektroantrieb mit einem Niedertemperatur (NT)- Kühlkreislauf des Fahrzeugs, welcher mindestens mit einem Verdampfer, einem Verdichter, einem Kondensator und einem Kühler versehen ist, an welchem die Batterie über einen separaten abgezweigten Kältekreislauf verdampferseitig zur Kühlung der Batterie über den Niedertemperaturkreislauf angebunden ist, wobei zwischen dem Kältekreislauf und dem Niedertemperaturkühlkreislauf ein erweiterter Kältekreislauf mit einem zusätzlichen Wärmetauscher vorgesehen ist, über welchen der Niedertemperaturkühlkreislauf und die Batterie kühlerseitig zusätzlich zur Abgabe von Wärme seitens der Batterie bei niedrigen Temperaturen zur Kühlung der Batterie in einem Kühlungsmodus und/oder zur Zufuhr von Wärme an die Batterie zur Vorwärmung der Batterie in einem Vorwärmungsmodus (beziehungsweise Kaltstart) der Batterie miteinander thermisch koppelbar sind. Die DE 101 28 164 A1 betrifft ein Fahrzeugkühlsystem für eine temperaturerhöhende Einrichtung, insbesondere Fahrbatterie oder Brennstoffzelle, vorzugsweise für ein Elektro- oder Hybridfahrzeug, mit einem die Einrichtung unter Einbeziehung einer die Luftkonditionierung des Fahrzeugs dienenden Klimaanlage kühlenden Kühlmedium. Es ist vorgesehen, dass das Kühlmedium eine Kühlflüssigkeit ist, die in einen Kühlkreislauf geführt wird und zu ihrer Kühlung thermisch in den Kältekreislauf der Klimaanlage eingebunden ist. Bei der DE 44 08 960 C1 werden Vorrichtungen zur Kühlung einer Traktionsbatterie vorgeschlagen, bei denen entweder die Batteriekühlschlangen mit einem vorgeordneten Expansionsventil parallel zum Verdampferzweig einer Fahrzeugklimaanlage in deren Kühlkreislauf eingefügt ist oder ein Kühlkreislauf mit Luft-/Wasser-Wärmetauscher verwendet wird, wobei dann ein weiteres Kühlaggregat vorgesehen ist, dessen Verdampfer in thermischem Kontakt mit diesem steht und der nach Bedarf aktivierbar ist. Damit wird bei geringem Aufwand an Leitungs- und Kühlkomponenten unter allen Umgebungsbedingungen die gewünschte Batterietemperatur eingehalten, insbesondere auch bei gegenüber der Batteriesolltemperatur höherer Umgebungstemperatur. Aus der EP 0 566 854 A2 ist eine Kältemaschine mit einem Kältemittelkreislauf sowie einem geschlossenen Sekundärkreislauf, der beispielsweise Wasser enthält, bekannt. Der Sekundärkreislauf überträgt Wärme zwischen der Kältemaschine und einem einzigen Wärmetauscher, der in einem der Klimatisierung der Fahrgastzelle dienenden Gebläseluftstrom angeordnet ist. An den Sekundärkreislauf ist auch der Kühlerkreislauf des Fahrzeugs angebunden, um Abwärme des Antriebsmotors und ggfs. der Batterien eines Elektrofahrzeugs zur Klimatisierung des Raums nutzbar zu machen. Ferner offenbart auch die DE 10 2006 004 414 A1 eine Fahrzeugklimaanlage mit einem Sekundärkreislauf zur Kühlung von Elektroaggregaten bzw. Elektronikelementen, wobei der Sekundärkreislauf einen Wärmetauscher umfasst, der in Wärmeleitkontakt mit einer Temperatursenke des Primärkreislaufs steht. Schließlich zeigt die DE 10 2006 004 419 A1 eine Kühlkonstruktion, die mehrere plattenförmige, wärmeerzeugende Elemente, wie beispielsweise Batterieteile enthält. Zwischen den plattenförmigen Elementen sind Fluidkanäle ausgebildet, mittels welchen eine Kühlung der Batterieteile erfolgen kann.

Aufgabe der Erfindung ist es, ein verbessertes Temperieren einer Stromquelle eines Fahrzeugs zu ermöglichen, insbesondere mit möglichst wenigen zusätzlichen Komponenten, vorzugsweise unter Verwendung von üblicherweise bei einem Fahrzeug vorgesehenen Komponenten, auszukommen.

Die Aufgabe ist bei einer Vorrichtung zum Temperieren einer Stromquelle, insbesondere einer Batterie, eines Fahrzeugs, mit einem ersten Fluidpfad eines Klimageräts zum Temperieren und Führen von Luft, einem der Batterie thermisch zugeordneten zweiten Fluidpfad zum Führen eines Kühlmediums eines Kühlers und des Klimageräts und einem dem Klimagerät zugeordneten dritten Fluidpfad zum Führen eines Kältemittels einer Kältemaschine zum Erzeugen von Kälte dadurch gelöst, dass der erste Fluidpfad einen Kältemittel-Luft-Wärmetauscher des dritten Fluidpfads der Kältemaschine und diesem nachgeschaltet einen Kühlmedium-Luft-Wärmetauscher des zweiten Fluidpfads des Klimageräts aufweist. Vorteilhaft kann mittels der in dem ersten Fluidpfad führbaren Luft eine Kälteleistung von dem dritten Fluidpfad auf den zweiten Fluidpfad übertragen werden. Mittels des zweiten Fluidpfads kann die so übertragene Kälteleistung weiter auf die Batterie zum Temperieren beziehungsweise Kühlen übertragen werden. Vorteilhaft sind der Kältemittel-Luft-Wärmetauscher sowie der Kühlmedium-Luft-Wärmetauscher Teile der Kältemaschine beziehungsweise des Klimageräts und sind daher ohnehin an dem Fahrzeug vorhanden, insbesondere zum Klimatisieren eines Innenraums des Fahrzeugs. Bei der Kältemaschine kann es sich um eine üblicherweise in dem Fahrzeug vorhandene Klimaanlage handeln. Bei dem Kühlmedium-Luft-Wärmetauscher des Klimageräts kann es sich um einen zum Beheizen des Innenraums des Fahrzeugs vorgesehenen Wärmetauscher handeln. Unter Fluidpfad kann eine allgemeine Strecke zum Führen eines Fluids, beispielsweise flüssig oder gasförmig, verstanden werden, insbesondere in Form eines geschlossenen Kreises. Unter Kältemittel kann ein für Kältemaschinen geeignetes Medium, das beispielsweise bei geeigneten Drücken und/oder Temperaturen einen Phasenwechsel von flüssig zu gasförmig - und umgekehrt - vollzieht, verstanden werden. Unter Kühlmedium kann ein zum Transportieren von Wärme geeignetes Medium, insbesondere eine Flüssigkeit, beispielsweise Wasser, beispielsweise Wasser mit Zusätzen zum Erniedrigen eines Gefrierpunktes, verstanden werden.

Es ist vorgesehen, dass der zweite Fluidpfad einen dem Kühlmedium-Luft-Wärmetauscher nachgeschalteten weiteren Kühlmedium-Luft-Wärmetauscher aufweist, der der Batterie thermisch zugeordnet oder zuordenbar ist. Vorteilhaft kann mittels des weiteren Kühlmedium-Luft-Wärmetauschers die Temperierung der Batterie erfolgen. Alternativ und/oder zusätzlich ist es denkbar, dass ein direkter Übergang von Wärme von dem Kühlmedium auf die Batterie erfolgt, also kein Umweg über eine Luftkühlung mehr erforderlich ist.

In Ausgestaltung der Erfindung ist vorgesehen, dass der weitere Kühlmedium-Luft-Wärmetauscher mittels eines ein Gebläse aufweisenden vierten Fluidpfads thermisch der Batterie zugeordnet ist. Bei dem vierten Fluidpfad kann es sich um einen geschlossenen Kreis zirkulierender Luft zum Ab- und/oder Zuführen von Wärme zu oder von der Batterie handeln.

Bei einem weiteren Ausführungsbeispiel der Vorrichtung ist vorgesehen, dass der Kühler, der Kühlmedium-Luft-Wärmetauscher und der weitere Kühlmedium-Luft-Wärmetauscher parallel zueinander geschaltet sind, wobei mittels eines Batteriekühlungssteuerorgans des zweiten Fluidpfads ein Volumenstromverhältnis des durch den Kühler, den Kühlmedium-Luft-Wärmetauscher und den weiteren Kühlmedium-Luft-Wärmetauscher strömenden Kühlmediums einstellbar ist. Vorteilhaft kann mittels des Batteriekühlungssteuerorgans eingestellt werden, ob die Kälteleistung über den ersten Fluidpfad, also mittels des Kühlmedium-Luft-Wärmetauschers auf den zweiten Fluidpfad übertragen wird oder ob die Kälteleistung direkt über den Kühler des zweiten Fluidpfads übertragen wird.

Bei einem weiteren Ausführungsbeispiel der Vorrichtung ist vorgesehen, dass der zweite Fluidpfad eine Wärmequelle aufweist, die thermisch der Batterie zugeordnet oder zuordenbar ist. Vorteilhaft kann mittels der Wärmequelle eine Vorwärmung der Batterie erfolgen. Bei der Wärmequelle kann es sich beispielsweise um einen Zuheizer, insbesondere einen elektrischen Zuheizer, insbesondere einen PTC (positiver Temperaturkoeffizient)-Zuheizer, insbesondere eine Wärmepumpe, insbesondere einen Kraftstoffzuheizer handeln.

Bei einem weiteren Ausführungsbeispiel der Vorrichtung ist vorgesehen, dass die Wärmequelle zu dem Kühler, dem Kühlmedium-Luft-Wärmetauscher und dem weiteren Kühlmedium-Luft-Wärmetauscher parallel geschaltet ist, wobei mittels eines Batterieheizungssteuerorgans ein Heizungsteilvolumenstrom des Kühlmediums durch die Wärmequelle einstellbar ist. Vorteilhaft kann mittels des Batterieheizungssteuerorgans ein Betriebszustand der Vorrichtung eingestellt werden, während dessen eine Vorwärmung der Batterie möglich ist. Falls dies nicht möglich ist, kann der Heizungsteilvolumenstrom reduziert, gegebenenfalls auf Null reduziert werden.

In Ausgestaltung der Vorrichtung ist es vorgesehen, dass der erste Fluidpfad in einen Innenraum des Fahrzeugs mündet. Vorteilhaft kann es sich bei dem ersten Fluidpfad um einen üblicherweise zum Beheizen des Fahrzeugs vorhandenen Luftkanal handeln.

Die Aufgabe ist bei einem Fahrzeug, insbesondere Kraftfahrzeug, mit einer temperierbaren Stromquelle gelöst. Es ergeben sich die vorab beschriebenen Vorteile.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger sinnvoller Kombination den Gegenstand der Erfindung, gegebenenfalls auch unabhängig von den Ansprüchen, und können insbesondere zusätzlich auch Gegenstand einer oder mehrerer separaten Erfindung/en sein. Gleiche, ähnliche und/oder funktionsgleiche Teile sind mit gleichen Bezugszeichen versehen.

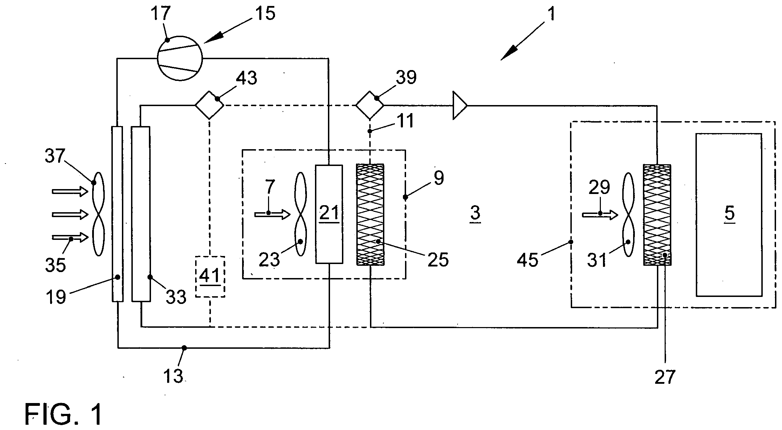

Die einzige Figur 1 zeigt eine schematische Ansicht einer Vorrichtung zum Temperieren einer Batterie eines Fahrzeugs.

Figur 1 zeigt eine schematische Ansicht einer Vorrichtung 1 eines Kraftfahrzeugs 3. Bei dem Kraftfahrzeug 3 handelt es sich insbesondere um ein Elektrofahrzeug, dessen Fahrenergie einer Batterie 5, insbesondere Traktionsbatterie, entnommen werden kann. Mittels der Vorrichtung 1 kann die Batterie 5 temperiert, also gegebenenfalls gekühlt oder vorgewärmt werden.

Das in Figur 1 nur teilweise dargestellte Kraftfahrzeug 3 weist einen ersten Fluidpfad 7 auf, mittels dem Luft von einem Äußeren in ein Inneres des Kraftfahrzeugs 3 führbar ist. Der erste Fluidpfad 7 ist Teil eines Klimageräts 9, das in Figur 1 mittels eines strichpunktierten Rechtecks angedeutet ist. Durch das Klimagerät 9 führt ein zweiter Fluidpfad 11, der zum Führen eines Kühlmediums ausgelegt ist. Außerdem führt durch das Klimagerät 9 ein dritter Fluidpfad 13, der zum Führen eines Kältemittels einer Kältemaschine 15 des Kraftfahrzeugs 3 ausgelegt ist. Bei der Kältemaschine 15 handelt es sich um eine übliche Fahrzeug-Klimaanlage mit einem Kompressor 17, diesem nachgeschaltet einem Kondensator 19 und diesem nachgeschaltet einem Kältemittel-Luft-Wärmetauscher 21 beziehungsweise Verdampfer. Bei dem dritten Fluidpfad 13 handelt es sich um einen Kreislauf der Kältemaschine 15.

Ein entsprechender Volumenstrom des ersten Fluidpfads 7 ist mittels eines Gebläses 23 antreibbar, wobei eine Strömungsrichtung mittels eines Pfeils in Figur 1 angedeutet ist. Entsprechend mittels des Gebläses 23 bewegte Luft kann zunächst dem Kältemittel-Luft-Wärmetauscher 21 und diesem nachgeschaltet einen Kühlmedium-Luft-Wärmetauscher 25 des zweiten Fluidpfads 11 durchströmen, um dann in den nicht näher dargestellten Innenraum des Kraftfahrzeugs 3 zu gelangen.

Vorteilhaft ist dem Kühlmedium-Luft-Wärmetauscher 25 ein weiterer Kühlmedium-Luft-Wärmetauscher 27 nachgeschaltet. Der weitere Kühlmedium-Luft-Wärmetauscher 27 ist thermisch der Batterie 5 zugeordnet und kann eine Wärmeleistung oder Kälteleistung auf die Batterie 5 übertragen. Die Übertragung der Wärme- beziehungsweise Kälteleistung kann mittels eines vierten Fluidpfads 29 erfolgen, der zum Führen eines Luftstroms geeignet ist. Der Luftstrom kann mittels eines weiteren Gebläses 31 angetrieben werden. Bei dem vierten Fluidpfad 29 kann es sich um einen geschlossenen Kreislauf zum Zirkulieren von Luft zwischen der Batterie 5 und dem weiteren Kühlmedium-Luft-Wärmetauscher 27 handeln.

Der zweite Fluidpfad 11 weist zum Abführen von Wärme einen Kühler 33 auf. Der Kühler 33 ist bezüglich eines fünften Fluidpfads 35, der zum Führen von Kühlluft ausgelegt ist, dem Kondensator 19 der Kältemaschine 15 nachgeschaltet. Eine Strömungsrichtung der mittels des fünften Fluidpfads 35 geführten Kühlluft ist in Figur 1 mittels drei Pfeilen angedeutet. Gegebenenfalls kann ein entsprechender Kühlluftstrom mittels eines Kühlergebläses 37 angetrieben werden. Der Kühler 33, der Kühlmedium-Luft-Wärmetauscher 25 sowie der weitere Kühlmedium-Luft-Wärmetauscher 27 sind parallel zueinander geschaltet.

Mittels eines Batteriekühlungssteuerorgans 39, das in den zweiten Fluidpfad 11 geschaltet ist, kann ein Volumenstromverhältnis eingestellt werden, wobei es wahlweise oder in einem beliebigen Zwischenverhältnis möglich ist, die zum Kühlen der Batterie 5 notwendige Kälteleistung mittels des Kühlmedium-Luft-Wärmetauschers 25 und/oder des Kühlers 33 in den zweiten Fluidpfad 11 einzubringen.

Wie in Figur 1 mittels gestrichelten Linien eingezeichnet, weist der zweite Fluidpfad 11 einen weiteren Parallelzweig auf, in den ein Zuheizer 41 geschaltet ist. Bei dem Zuheizer 41 kann es sich beispielsweise um einen elektrischen Zuheizer, einen Kraftstoffzuheizer und/oder eine Wärmepumpe und/oder Ähnliches handeln. Der Zuheizer 41 ist zu dem Kühler 33, dem Kühlmedium-Luft-Wärmetauscher 25 und zu dem weiteren Kühlmedium-Luft-Wärmetauscher 27 parallel geschaltet. Ein durch den Zuheizer 41 führender Heizungsteilvolumenstrom des durch den zweiten Fluidpfad 11 geführten Kühlmediums ist mittels eines Batterieheizungssteuerorgans 43 einstellbar. Bei den Steuerorganen 39 und 43 kann es sich um Schaltventile, Regel- und/oder Steuerventile handeln.

Der vierte Fluidpfad 29, das weitere Gebläse 31, der weitere Kühlmedium-Luft-Wärmetauscher 27 sowie die Batterie 5 sind Teil eines in Figur 1 mittels eines strichpunktierten Quadrats angedeuteten Batteriemoduls 45.

Bei dem Batteriemodul 45 handelt es sich um eine luftgekühlte Batterie 5. Alternativ und/oder zusätzlich ist es jedoch auch denkbar, eine direkte Wärmeübertragung zwischen dem Kühlmedium des zweiten Fluidpfads 11 und der Batterie 5 vorzusehen. Besonders vorteilhaft kann dann die Batterie 5 direkt wassergekühlt werden.

Das von der Batterie 5 über die in dem vierten Fluidpfad 29 umgewälzte und erwärmte Luft erwärmte Kühlmedium beziehungsweise Wasser kann vorteilhaft entweder über den fahrzeugeigenen Kühler 33 oder über den Kühlmedium-Luft-Wärmetauscher 25 gekühlt werden. Der Kühler 33 wird genutzt, wenn der Innenraum des Kraftfahrzeugs 3 keinen weiteren Wärmeeintrag erfahren soll oder kein Luftdurchsatz durch den ersten Fluidpfad 7 in das Kraftfahrzeug 3 gewünscht ist.

Falls von der Batterie 5 bei einer kalten Witterung, beispielsweise in einem Winter, an einer Ladestation geladen werden soll, so kann dabei anfallende Abwärme für ein Vorkonditionieren des Innenraums genutzt werden.

Solange der Innenraum nicht geheizt werden muss, ist mit der in Figur 1 gezeigten Vorrichtung 1 eine aktive Batteriekühlung der Batterie 5 möglich. In diesem Fall wird die von dem Kältemittel-Luft-Wärmetauscher 21 gekühlte Luft über dem Kühlmedium-Luft-Wärmetauscher 25 geleitet und somit das Kühlmedium beziehungsweise das Wasser, das zu der Batterie 5 strömt, gekühlt.

Ein weiterer Nutzen besteht darin, dass die Batterie 5 bei sehr tiefen Außentemperaturen an der Ladestation vorgewärmt werden kann. Bei der Batterie 5 kann es sich um eine solche Batterie handeln, die eine gewisse Temperatur benötigt, bevor sie effektiv geladen werden kann. Vorteilhaft kann das Vorwärmen der Batterie 5 in diesem Betriebsfall durch den wasserseitig beziehungsweise kühlmediumseitig heizenden Zuheizer 41 ermöglicht werden, der üblicherweise auch zum Heizen des Innenraums des Kraftfahrzeugs 3, bei dem es sich um ein Elektrofahrzeug handeln kann, eingesetzt wird. Der zweite Fluidpfad 11 beziehungsweise ein entsprechender Wasserkreislauf kann hierzu über die Steuerungsorgane beziehungsweise - ventile 39 und 43 entsprechend geschaltet beziehungsweise eingestellt werden. Gegebenenfalls kann es sich bei dem Zuheizer 41 um einen elektrischen Zuheizer, eine Wärmepumpe, einen Brennstoffzuheizer und/oder Ähnliches handeln.

Vorteilhaft ermöglicht die Vorrichtung 1 einen erweiterten Funktionsbereich ohnehin vorhandener Klimatisierungskomponenten beziehungsweise eines herkömmlichen Klimageräts beziehungsweise des Klimageräts 9.

### Bezugszeichenliste

- 1: Vorrichtung
- 3: Kraftfahrzeug
- 5: Batterie
- 7: erster Fluidpfad
- 9: Klimagerät
- 11: zweiter Fluidpfad
- 13: dritter Fluidpfad
- 15: Kältemaschine
- 17: Kompressor
- 19: Kondensator
- 21: Kältemittel-Luft-Wärmetauscher
- 23: Gebläse
- 25: Kühlmedium-Luft-Wärmetauscher
- 27: Kühlmedium-Luft-Wärmetauscher
- 29: vierter Fluidpfad
- 31: Gebläse
- 33: Kühler
- 35: fünfter Fluidpfad
- 37: Kühlergebläse
- 39: Batteriekühlungssteuerorgan
- 41: Zuheizer
- 43: Batterieheizungssteuerorgan
- 45: Batteriemodul

## Patentansprüche

1. Fahrzeug, insbesondere Kraftfahrzeug mit einer Vorrichtung (1) zum Temperieren einer Batterie (5) des Fahrzeugs (3) mit:
- einem ersten Fluidpfad (7) eines Klimageräts (9) mit einem ersten Gebläse (23) zum Temperieren und Führen von Luft, der in einen Innenraum des Fahrzeugs (3) mündet
- einem der Batterie thermisch zugeordneten zweiten Fluidpfad (11) zum Führen eines Kühlmediums eines Kühlers (33) und des Klimageräts (9),
- einem dem Klimagerät (9) zugeordneten, durch dieses führenden dritten Fluidpfad (13) zum Führen eines Kältemittels einer Kältemaschine (15) zum Erzeugen von Kälte,
wobei der erste Fluidpfad (7) einen Kältemittel-Luft-Wärmetauscher (21) des dritten Fluidpfads (13) und diesem nachgeschaltet einen Kühlmedium-Luft-Wärmetauscher (25) des zweiten Fluidpfads (11) des Klimageräts (9) aufweist, **dadurch gekennzeichnet, dass** der zweite Fluidpfad (11) einen dem Kühlmedium-Luft-Wärmetauscher (25) nachgeschalteten weiteren Kühlmedium-Luft-Wärmetauscher (27) aufweist, der mittels eines ein zweites Gebläse (31) aufweisenden vierten Fluidpfads (29) zum Zirkulieren von Luft zwischen der Batterie (5) und dem Kühlmedium-Luft-Wärmetauscher (27) thermisch der Batterie (5) zugeordnet ist.

2. Fahrzeug nach Anspruch 1, **dadurch gekennzeichnet, dass** der Kühler (33), der Kühlmedium-Luft-Wärmetauscher (25) und der weitere Kühlmedium-Luft-Wärmetauscher (27) parallel zueinander geschaltet sind, wobei mittels eines Batteriekühlungsstellorgans (39) des zweiten Fluidpfads (11) ein Volumenstromverhältnis des durch den Kühlmedium-Luft-Wärmetauscher (25), den weiteren Kühlmedium-Luft-Wärmetauscher (27) und/oder den Kühler (33) strömenden Kühlmediums einstellbar ist.

3. Fahrzeug nach einem der vorhergehenden Ansprüche, **dadurch gekennzeichnet, dass** der zweite Fluidpfad (11) eine Wärmequelle, insbesondere einen Zuheizer (41), aufweist, die thermisch der Batterie (5) zugeordnet ist.

4. Fahrzeug nach dem vorhergehenden Anspruch **dadurch gekennzeichnet, dass** die Wärmequelle zu dem Kühler (33), dem Kühlmedium-Luft-Wärmetauscher (25) und dem weiteren Kühlmedium-Luft-Wärmetauscher (27) parallel geschaltet ist, wobei mittels eines Batterieheizungssteuerorgans (43) ein Heizungsteilvolumenstrom des Kühlmediums durch die Wärmequelle einstellbar ist.

## Claims

1. Vehicle, in particular motor vehicle, having a device (1) for controlling the temperature of a battery (5) of the vehicle (3) with:
- a first fluid path (7) of an air-conditioning unit (9) having a first blower (23) for controlling the temperature of and carrying air, which fluid path opens into an interior space of the vehicle (3),
- a second fluid path (11) which is thermally assigned to the battery and which serves for carrying a coolant of a radiator (33) and of the air-conditioning unit (9),
- a third fluid path (13) assigned to the air-conditioning unit (9) and passing through this for carrying a refrigerant of a refrigerating machine (15) for generating cold,
the first fluid path (7) having a refrigerant-air heat exchanger (21) of the third fluid path (13) and, downstream of this, a coolant-air heat exchanger (25) of the second fluid path (11) of the air-conditioning unit (9), **characterized in that** the second fluid path (11) has, downstream of the coolant-air heat exchanger (25), a further coolant-air heat exchanger (27), the latter being thermally assigned to the battery (5) by means of a fourth fluid path (29) which has a second blower (31) and which serves for circulating air between the battery (5) and the coolant-air heat exchanger (27).

2. Vehicle according to Claim 1, **characterized in that** the radiator (33), the coolant-air heat exchanger (25) and the further coolant-air heat exchanger (27) are connected in parallel with one another, a volumetric flow ratio of the coolant flowing through the coolant-air heat exchanger (25), the further coolant-air heat exchanger (27) and/or the radiator (33) being able to be set by means of a battery-cooling actuating element (39) of the second fluid path (11).

3. Vehicle according to one of the preceding claims, **characterized in that** the second fluid path (11) has a heat source, in particular an auxiliary heater (41), which is thermally assigned to the battery (5).

4. Vehicle according to the preceding claim, **characterized in that** the heat source is connected in parallel with the radiator (33), the coolant-air heat exchanger (25) and the further coolant-air heat exchanger (27), a heating-related partial volumetric flow of the coolant through the heat source being able to be set by means of a battery-heating control element (43).

## Revendications

1. Véhicule, notamment véhicule à moteur, comportant un dispositif (1) destiné à tempérer une batterie (5) du véhicule (3), comportant :
- un premier circuit de fluide (7) d'un appareil de climatisation (9), comportant un premier ventilateur (23) destiné à tempérer et à conduire de l'air, qui débouche dans un espace intérieur du véhicule (3),
- un deuxième circuit de fluide (11) associé thermiquement à la batterie, destiné à conduire un fluide réfrigérant d'un dispositif de réfrigération (33) et de l'appareil de climatisation (9),
- un troisième circuit de fluide (13) associé à l'appareil de climatisation (9) et passant à travers celui-ci pour conduire un agent de refroidissement d'une machine de refroidissement (15) afin de produire du froid,
dans lequel le premier circuit de fluide (7) comporte un échangeur de chaleur agent de refroidissement-air (21) du troisième circuit de fluide (13) et un échangeur de chaleur fluide de refroidissement-air (25) relié en aval du troisième circuit de fluide sur le deuxième circuit de fluide (11) de l'appareil de climatisation (9), **caractérisé en ce que** le deuxième circuit de fluide (11) comporte un autre échangeur de chaleur fluide de refroidissement-air (27) relié en aval de l'échangeur de chaleur fluide de refroidissement-air (25), qui est associé thermiquement à la batterie (5) par l'intermédiaire d'un quatrième circuit de fluide (29) comportant un deuxième ventilateur (31) pour la mise en circulation d'air entre la batterie (5) et l'échangeur de chaleur fluide de refroidissement-air (27).

2. Véhicule selon la revendication 1, **caractérisé en ce que** le dispositif de refroidissement (33), l'échangeur de chaleur fluide de refroidissement-air (25) et l'autre échangeur de chaleur fluide de refroidissement-air (27) sont reliés l'un à l'autre en parallèle, dans lequel un rapport de débit volumique du fluide de refroidissement s'écoulant à travers l'échangeur de chaleur fluide de refroidissement-air (25), l'autre échangeur de chaleur fluide de refroidissement-air (27) et/ou le dispositif de refroidissement (33) peut être réglé au moyen d'un organe de réglage de refroidissement de batterie (39) du deuxième circuit de fluide (11).

3. Véhicule selon l'une quelconque des revendications précédentes, **caractérisé en ce que** le deuxième circuit de fluide (11) comporte une source de chaleur, notamment un chauffage auxiliaire (41), qui est associée thermiquement à la batterie (5).

4. Véhicule selon la revendication précédente, **caractérisé en ce que** la source de chaleur est reliée en parallèle au dispositif de refroidissement (33), à l'échangeur de chaleur fluide de refroidissement-air (25) et à l'échangeur de chaleur fluide de refroidissement-air (27), dans lequel un débit volumique partiel de chauffage du fluide de refroidissement à travers la source de chaleur peut être réglé au moyen d'un organe de commande de chauffage de batterie (43).
